# EUROPÄISCHE PATENTSCHRIFT

(11) **EP 0 411 728 B1**
(45) Veröffentlichungstag und Bekanntmachung des Hinweises auf die Patenterteilung: **13.10.1993**
(21) Anmeldenummer: 90250187.3
(22) Anmeldetag: 20.07.1990
(51) Int. Cl.: H02B 11/133

(54) **Einschub für einen Schaltschrank mit einer Verriegelungseinrichtung**
Drawer for electrical cabinets with a locking device
Tiroir pour armoire électrique avec un dispositif de verrouillage

(30) Priorität: 01.08.1989 DE 3925825
(43) Veröffentlichungstag der Anmeldung: 06.02.1991
(73) Patentinhaber: SIEMENS AKTIENGESELLSCHAFT, 80333 München (DE)
(72) Erfinder: Rössler, Karl-Heinz, D-6457 Maintal 1 (DE)

(56) Entgegenhaltungen:
- DE-C- 916 652
- DE-U- 8 010 118
- FR-A- 2 420 863

## Beschreibung

Die Erfindung betrifft einen Einschub für einen Schaltschrank mit einer sich in der Fahrrichtung des Einschubes erstreckenden Antriebswelle eines Schalters und einer in Abhängigkeit von der Stellung der Antriebswelle betätigten Verriegelungseinrichtung. Ein Einschub dieser Art ist beispielsweise durch die DE-C-36 30 812 bekannt geworden. Die Verriegelungseinrichtung umfaßt dabei einen auf der Antriebswelle des Schalters angebrachten Riegel, der bei einer Drehung der Antriebswelle über die Kontur des Einschubes hervortritt.

Der Erfindung liegt hiervon ausgehend die Aufgabe zugrunde, eine solche Verriegelungseinrichtung für einen mit zwei Schaltern und zugehörigen Antriebswellen versehenen Einschub verwendbar zu machen und hierbei zugleich die beiden Antriebswellen in der Weise in Abhängigkeit zu bringen, daß die Drehung der einen Antriebswelle gesperrt ist, sobald die andere betätigt wird.

Diese Aufgabe wird gemäß der Erfindung dadurch gelöst, daß auf der Antriebswelle des Schalters und auf der parallel angeordneten Antriebswelle eines weiteren Schalters je eine etwa zylindrische mit einer Ausnehmung versehene Sperrscheibe angeordnet ist, wobei jeder Ausnehmung eine an den Enden eines zweiarmigen, waagebalkenartigen Hebels angebrachte Sperrnase zugeordnet ist und eine den zweiarmigen Hebel symmetrisch beaufschlagende Rückstellfeder vorgesehen ist und wobei ferner die Sperrnasen bei neutraler Stellung des zweiarmigen Hebels in die Aussparungen der Sperrscheiben teilweise eintauchend angeordnet sind und der zweiarmige Hebel mittig einen etwa rechtwinklig abragenden Sperrhebel für das Zusammenwirken mit einem Gegenstück besitzt.

Der waagebalkenartige zweiarmige Hebel kann dabei zusammen mit dem abragenden Sperrhebel als einstückiges ebenes Blechteil ausgebildet sein, so daß die Positionsverriegelung und die gleichzeitige gegenseitige Verriegelung der Antriebswellen auf überraschend einfache Weise erreicht wird.

Der Sperrhebel kann für das Zusammenwirken mit dem erwähnten Gegenstück an seinem freien Ende mit einer Aussparung versehen sein. Hierbei eignet sich als Gegenstück insbesondere eine in der Fahrrichtung des Einschubes erstreckende, mit Ausnehmungen für den Eingriff des Sperrhebels versehene Schiene. Befindet sich bei dieser Anordnung der zweiarmige Hebel in seiner neutralen Stellung, so läßt sich der Einschub mit der Aussparung des Sperrhebels ohne Berührung entlang der Schiene verschieben. Insbesondere für die Betriebsstellung kann in der Schiene eine Ausnehmung vorgesehen sein, in die der Sperrhebel bei einer Auslenkung aus seiner neutralen Mittelstellung eintauchen kann. Eine Verschiebung des Einschubes ist dann gesperrt. Diese Einrichtung kann sinngemäß für weitere Stellungen des Einschubes vorgesehen sein.

Die als Gegenstück für den Sperrhebel vorgesehene Schiene kann an einer an dem Einschub drehbar gelagerten, als Antriebsorgan für die Fahrbewegung des Einschubes dienenden Scheibe angebracht ein. In diesem Fall weist die Schiene eine kreisbogenförmige Kontur auf.

Die Ausnehmungen der Sperrscheiben und die Sperrnasen der zweiarmigen Hebels können etwa rechtwinklig zueinanderstehende Flanken aufweisen. Diese Gestaltung ergibt ein günstiges Zusammenwirken der Teile in der Weise, daß bei einer Drehung der Sperrscheibe die Sperrnase bis zum Umfang der Scheibe angehoben und hierdurch die am gegenüberliegenden Ende des zweiarmigen Hebels befindliche weitere Sperrnase soweit zum Eintauchen in die Ausnehmung der Sperrscheibe gebracht wird, daß deren Drehung - und damit eine Drehung der zugehörigen Antriebs welle - verhindert wird.

Die Rückstellung des zweiarmigen Hebels in seine neutrale Mittelstellung kann durch Federn unterschiedlicher Art z. B. eine Blattfeder erreicht. Als geeignet hat sich insbesondere eine Anordnung erwiesen, bei welcher der Sperrhebel eine Ausnehmung für eine an dem Sperrhebel einerseits und einem ortsfesten Widerlager andererseits abgestützte, als Rückstellfeder dienende Zugfeder besitzt. Eine solche Anordnung überschreitet nicht wesentlich die Dicke des zweiarmigen Hebels und des hiermit einstückigen Sperrhebels und führt somit zu einer insgesamt einfachen und zuverlässigen Anordnung.

Die Erfindung wird im folgenden anhand des in den Figuren dargestellten Ausführungsbeispieles näher erläutert.

Die Figur 1 zeigt schematisch in einer Frontansicht einen Einschub mit zwei parallel angeordneten Schaltern und zugehörigen Antriebswellen.

Die Figur 2 zeigt zwei parallele Antriebswellen von Schaltern in Verbindung mit einer Verriegelungseinrichtung.

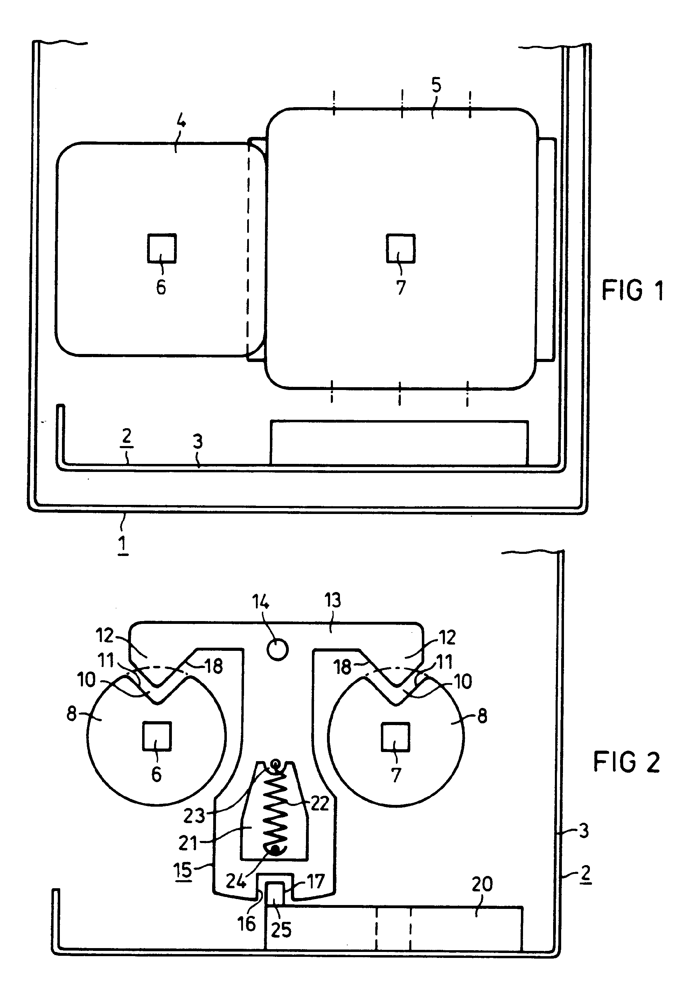

In der Figur 1 ist schematisch als Umriß ein Einschubträger 1 gezeigt, in dem ein Einschub 2 verschiebbar geführt ist. Der Einschub 2 weist ein Rahmenteil 3 mit zwei nebeneinander angeordneten Schaltern 4 bzw. 5 auf. Wie gezeigt, können die Schalter 4 und 5 unterschiedlich groß sein, je nachdem, welche Schaltaufgaben jeweils bestehen.

Die in der Figur 1 gezeigten Schalter 4 und 5 besitzen zur Betätigung ihrer Schaltglieder jeweils eine Antriebswelle 6 bzw. 7, die sich in gleicher Höhe über dem Boden des Rahmenteiles 3 befinden. Mit den Antriebswellen 6 und 7 wirkt eine Verriegelungseinrichtung zusammen, deren Aufbau nachstehend anhand der Figur 2 erläutert wird. Diese Einrichtung kann sich unmittelbar vor oder hinter den Schaltern 4 und 5 oder im Bereich einer speziellen Verlängerung der Antriebswellen 6 und 7 befinden.

Gemäß der Figur 2 sitzt auf jeder der Antriebswellen 6 bzw. 7 eine Sperrscheibe 8, deren kreisförmiger Umfang nur an einer Stelle durch eine Ausnehmung 10 unterbrochen ist. Die Flanken 11 der Ausnehmungen 10 stehen unter einem Winkel von etwa 90° zueinander. In der in der Figur 2 gezeigten Stellung der Sperrscheiben 8 steht jeder Ausnehmung 10 eine Sperrnase 12 eines zweiarmigen, etwa waagebalkenartig gestalteten und gelagerten Hebels 13 gegenüber. Die gleichfalls mit etwa rechtwinklig zueinander stehenden Flanken 18 versehenen Sperrnasen 12 tauchen dabei teilweise in die Ausnehmungen 10 ein, wie anhand der gestrichelt ergänzten kreisförmigen Kontur der Sperrscheiben 8 erkennbar ist. Der auf einem Lagerbolzen 14 schwenkbar gelagerte zweiarmige Hebel 13 trägt mittig einen sich zwischen den Antriebswellen 6 und 7 erstreckenden Sperrhebel 15, der an seinem unteren, freien Ende ein Ausnehmung 16 aufweist. Mit dieser Ausnehmung übergreift der Sperrhebel 15 eine Schiene 17, die entweder ortsfest an dem Einschubträger 1 angeordnet sein kann oder, wie dies in der Figur 2 gezeigt ist, Bestandteil einer an dem Rahmenteil 3 des Einschubes 2 drehbar gelagerten Scheibe 20 sein kann, die zum Ein- und Ausfahren des Einschubes 2 in dem Einschubträger 1 vorgesehen ist. Hierbei ist die Schiene entsprechend der Kontur der Antriebsscheibe kreisbogenförmig gekrümmt.

Der Sperrhebel 15 ist in seinem unteren Bereich verbreitert ausgebildet und dort mit einer fensterartigen Ausnehmung 21 versehen, in der eine Zugfeder 22 aufgenommen ist. Diese ist in einer am oberen Ende der Ausnehmung 21 vorgesehen Öse 23 sowie mit ihrem unteren Ende an einem ortsfesten, in die Ausnehmung 21 hineinragenden Stift 24 eingehängt. In dieser Anordnung übt die Zugfeder 22 eine symmetrische Rückstellkraft auf den zweiarmigen Hebel 13 aus, der hierdurch in der gezeigten neutralen Stellung gehalten wird. Entgegen der Rückstellkraft aufgrund der Wirkung der Zugfeder 22 kann der zweiarmige Hebel 13 in dem einen oder anderen Sinn geschwenkt werden, wenn infolge einer Drehung einer der Antriebswellen 6 bzw. 7 der Schalter 4 bzw. 5 eine Flanke 11 der Ausnehmung 10 der zugehörigen Sperrscheibe 8 gegen eine der Flanken 18 der Sperrnasen 12 bewegt und die Sperrnase hierdurch auf den Umfang der betreffenden Sperrscheibe 8 angehoben wird. Gleichzeitig taucht die Sperrnase an gegenüberliegenden Ende des zweiarmigen Hebels 13 tiefer in die zugehörige Sperrscheibe 8 ein und blockiert hierdurch eine Drehung der zugehörigen Antriebswelle 6 bzw. 7. Hierdurch wird zunächst erreicht, daß jeweils nur eine der Antriebswellen 6 bzw. 7 aus der Ruhestellung heraus betätigt werden kann.

Somit bewirkt die Betätigung eines der Schalter 4 bzw. 5 stets eine Schwenkung des zweiarmigen Hebels 13 und damit eine entsprechende Auslenkung des Sperrhebels 15. Dieser Vorgang wird zu einer Verriegelung eines Einschubes gegenüber seinem Einschubträger 1 mittels der Schiene 17 ausgenutzt. Befindet sich nämlich die Ausnehmung 16 am unteren Ende des Sperrhebels 15 an einer nicht unterbrochenen Stelle der Schiene 17, so ist die Auslenkung des Sperrhebels 15 auf einen kleinen Weg begrenzt, der nicht für eine Anhebung der Sperrnase 12 bis zum Umfang der betreffenden Sperrscheibe 8 ausreicht. Damit ist die zugehörige Antriebswelle 6 bzw. 7 blockiert. Steht dagegen der Sperrhebel 15 mit seiner Aussparung 16 im Bereich einer korrespondierenden Ausnehmung 25 der Schiene 17, so ist die Auslenkung des Sperrhebels 15 nicht behindert und die betreffende Antriebswelle 6 bzw. 7 kann in der gewünschten Weise betätigt werden.

Zweckmäßig werden Ausnehmungen 25 entsprechend der Darstellung in der Figur 2 insbesondere der Betriebsstellung und der Teststellung des Einschubes 2 zugeordnet, so daß nur in diesen Stellungen des Einschubes 2 die Schalter 4 bzw. 5 betätigt werden können und bei Betätigung der Einschub blockiert ist.

Wie die Figur 2 zeigt, sind der zweiarmige Hebel 13 und der Sperrhebel 15 einstückig, beispielsweise aus Stahlblech hergestellt. Da im übrigen neben den Kleinteilen, wie Stiften und einer Feder nur die beiden gleichen Sperrscheiben 8 benötigt werden, die als Kunststoffteile oder ebenfalls als Blechteile ausgebildet sein können, weist die gesamte Verriegelungseinrichtung einen einfachen und robusten Aufbau mit hoher Funktionssicherheit auf.

## Patentansprüche

1. Einschub (2) für einen Schaltschrank mit einer sich in der Fahrrichtung des Einschubes (2) erstreckenden Antriebswelle (6, 7) eines Schalters (4, 5) und einer in Abhängigkeit von der Stellung der Antriebswelle (6, 7) betätigten Verriegelungseinrichtung, **dadurch gekennzeichnet,** daß auf der Antriebswelle (6) des Schalters (4) und auf der parallel angeordneten Antriebswelle (7) eines weiteren Schalters (5) je eine etwa zylindrische, mit einer Ausnehmung (10) versehene Sperrscheibe (8) angeordnet ist, wobei jeder Ausnehmung (10) eine an den Enden eines zweiarmigen, waagebalkenartigen Hebels (13) angebrachte Sperrnase (12) zugeordnet und eine den zweiarmigen Hebel (13) symmetrisch beaufschlagende Rückstellfeder (22) vorgesehen ist und wobei ferner die Sperrnasen (12) bei neutraler Stellung des zweiarmigen Hebels (13) in die Aussparungen (10) der Sperrscheiben (8) teilweise eintauchend angeordnet sind und der zweiarmige Hebel (13) mittig einen etwa rechtwinklig abragenden Sperrhebel (15) für das Zusammenwirken mit einem Gegenstück (17) besitzt.

2. Einschub nach Anspruch 1, **dadurch** **gekennzeichnet,** daß der Sperrhebel (13) für das Zusammenwirken mit dem Gegenstück (17) an seinem freien Ende mit einer Aussparung (16) versehen ist.

3. Einschub nach Anspruch 1 oder 2,, **dadurch** **gekennzeichnet,** daß als Gegenstück eine sich in der Fahrrichtung des Einschubes (2) erstreckende, mit wenigstens einer Aussparung (25) für den Eingriff des Sperrhebels (15) versehene Schiene (17) vorgesehen ist.

4. Einschub nach Anspruch 3, **dadurch** **gekennzeichnet,** daß die Schiene (17) an einer an dem Einschub (2) drehbar gelagerten, als Antriebsorgan für die Fahrbewegung des Einschubes (2) dienende Scheibe (20) angebracht ist.

5. Einschub nach einem der vorangehenden Ansprüche, **dadurch gekennzeichnet,** daß die Ausnehmungen (10) der Sperrscheiben (8) und die Sperrnasen (12) des zweiarmigen Hebels (13) etwa rechtwinklig zueinanderstehende Flanken (11, 18) aufweisen.

6. Einschub nach einem der vorangehenden Ansprüche, **dadurch gekennzeichnet,** daß der Sperrhebel (15) eine fensterartige Ausnehmung (21) für eine an dem Sperrhebel (15) einerseits und an einem ortsfesten Widerlager (24) andererseits abgestützte Rückstellfeder (22) besitzt.

## Claims

1. Plug-in unit (2) for a switch cabinet having a drive shaft (6, 7) of a switch (4, 5) extending in the direction of travel of the plug-in unit (2) and having a locking device which is actuated as a function of the position of the drive shaft (6, 7), characterised in that arranged on the drive shaft (6) of the switch (4) and on the drive shaft (7), arranged in parallel, of a further switch (5) there is a respective, substantially cylindrical blocking disc (8) which is provided with a recess (10), whereby a blocking lug (12) provided at the ends of a two-armed, balance beam-type lever (13) is associated with each recess (10) and a restoring spring (22) is provided, which spring acts on the two-armed lever (13) in a symmetrical manner, and whereby, furthermore, when the two-armed lever (13) is in a neutral position, the blocking lugs (12) are arranged so that they dip in part into the cut-outs (10) of the blocking discs (8) and the two-armed lever (13) has in the centre a blocking lever (15) which projects down substantially at right angles thereto for cooperation with a counter-piece (17).

2. Plug-in unit according to claim 1, characterised in that for the cooperation with the counter-piece (17) the blocking lever (13) is provided with a cut-out (16) at its free end.

3. Plug-in unit according to claim 1 or 2, characterised in that there is provided as a counter-piece a rail (17) which extends in the direction of travel of the plug-in unit (2) and which is provided with at least one cut-out (25) for the engagement of the blocking lever (15).

4. Plug-in unit according to claim 3, characterised in that the rail (17) is provided on a disc (20) which is rotatably mounted on the plug-in unit (2) and which is used as a drive part for the travelling motion of the plug-in unit (2).

5. Plug-in unit according to one of the preceding claims, characterised in that the recesses (10) of the blocking discs (8) and the blocking lugs (12) of the two-armed lever (13) have flanks (11, 18) which are substantially at right angles to each other.

6. Plug-in unit according to one of the preceding claims, characterised in that the blocking lever (15) has a window-type recess (21) for a restoring spring (22) which is stayed on the blocking lever (15) on the one hand and on a fixed abutment (24) on the other hand.

## Revendications

1. Tiroir (2) pour une armoire électrique, comportant un interrupteur (4,5) possédant un arbre d'entraînement (6,7) qui s'étend dans la direction de déplacement du tiroir (2), et un dispositif de verrouillage actionné en fonction de la position de l'arbre d'entraînement (6,7), caractérisé par le fait que sur l'arbre d'entraînement (6) de l'interrupteur (4) et sur l'arbre parallèle d'entraînement (6) d'un autre interrupteur (5) sont montés des disques respectifs de blocage (8) approximativement cylindriques, qui sont pourvus d'un évidement (10), qu'à chaque évidement (10) est associé un bec de blocage (12) monté sur l'extrémité d'un levier (13) en forme de fléau à deux bras, qu'il est prévu un ressort de rappel (22) chargeant de façon symétrique le levier à deux bras (13), et qu'en outre, lorsque le levier à deux bras (13) est dans sa position neutre, les becs de blocage (12) s'engagent partiellement dans les évidements (10) des disques de blocage (8) et que le levier à deux bras (13) possède, dans sa partie centrale, un levier de blocage (15), qui fait saillie approximativement perpendiculairement et est destiné à coopérer avec une pièce antagoniste (17).

2. Tiroir suivant la revendication 1, caractérisé par le fait que le levier de blocage (13) comporte, à son extrémité libre, un évidement (16) destiné à coopérer avec l'élément antagoniste (17).

3. Tiroir suivant la revendication 1 ou 2, caractérisé par le fait qu'il est prévu, comme pièce antagoniste, un rail (17) qui s'étend dans la direction de déplacement du tiroir (2) et est pourvu d'au moins un évidement (25) prévu pour l'engagement du levier de blocage (15).

4. Tiroir suivant la revendication 3, caractérisé par le fait que le rail (17) est monté sur un disque (20) qui est monté rotatif dans le tiroir (2) et est utilisé comme organe d'entraînement pour le déplacement du tiroir (2).

5. Tiroir suivant l'une des revendications précédentes, caractérisé par le fait que les évidements (10) des disques de blocage (8) et les ergots de blocage (12) du levier à deux bras (13) possèdent des flancs (11,18) approximativement perpendiculaires entre eux.

6. Tiroir suivant l'une des revendications précédentes, caractérisé par le fait que le levier de blocage (15) possède un évidement en forme de fenêtre (21) pour un ressort de rappel (22) qui prend appui, d'une part, sur le levier de blocage (15), et, d'autre part, sur une butée fixe (24).
